(19) Europäisches Patentamt / European Patent Office / Office européen des brevets

(11) **EP 3 974 405 A1**

(12) **DEMANDE DE BREVET EUROPEEN**

(43) Date de publication:
**30.03.2022 Bulletin 2022/13**

(21) Numéro de dépôt: **20198345.9**

(22) Date de dépôt: **25.09.2020**

(51) Classification Internationale des Brevets (IPC):
**C04B 35/58** (2006.01) **A44C 5/00** (2006.01)

(52) Classification Coopérative des Brevets (CPC):
**C04B 35/58007; C04B 35/58014; C04B 35/58021; C04B 35/58028; C04B 35/58035;** C04B 2235/3217; C04B 2235/3244; C04B 2235/3839; C04B 2235/3843; C04B 2235/3847; C04B 2235/3856; C04B 2235/3886; C04B 2235/3891; C04B 2235/6567; C04B 2235/80;
(Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **The Swatch Group Research and Development Ltd**
**2074 Marin (CH)**

(72) Inventeurs:
• **BERTHEVILLE, Bernard**
  **1950 Sion (CH)**
• **FALLET, Yann**
  **2065 Savagnier (CH)**

(74) Mandataire: **ICB SA**
**Faubourg de l'Hôpital, 3**
**2001 Neuchâtel (CH)**

(54) **ARTICLE DÉCORATIF EN CERAMIQUE**

(57) L'invention concerne un article réalisé dans un matériau constitué de plusieurs phases céramiques, ledit matériau comportant :
- une phase céramique majoritaire comprenant des nitrures et/ou des carbonitrures d'un ou plusieurs éléments choisis parmi le Ti, Zr, Hf, V, et Ta, ladite phase céramique majoritaire étant présente dans un pourcentage en poids compris entre 60 et 98%,
- au moins une phase céramique minoritaire, avec soit une seule phase céramique minoritaire formée de siliciure de zirconium et/ou d'aluminium, soit plusieurs phases céramiques minoritaires formées respectivement de carbures d'un ou plusieurs éléments choisis parmi le Ti, Zr, Hf, V, Nb, Ta, Cr, Mo et W et d'oxydes de zirconium et/ou d'oxydes d'aluminium, ladite au moins phase céramique minoritaire étant présente dans sa totalité dans un pourcentage en poids compris entre 2 et 40%.
La présente invention se rapporte également au procédé de fabrication de cet article.

FIG.1

(52) Classification Coopérative des Brevets (CPC):
(Cont.)
C04B 2235/96; C04B 2235/9653

**Description**

DOMAINE TECHNIQUE

La présente invention se rapporte à un article et notamment à un composant d'habillage ou du mouvement en horlogerie, réalisé dans un matériau composite constitué uniquement de phases céramiques. Elle se rapporte également à son procédé de fabrication.

ART ANTERIEUR

De nombreux composants d'habillage sont réalisés dans des matériaux céramiques composites ayant entre autres l'avantage de présenter des duretés très élevées qui garantissent leur aptitude à ne pas se rayer. La littérature fait surtout état de composites constitués majoritairement d'un oxyde tel que l'alumine auquel on ajoute des carbures. Il peut, par exemple, s'agir de composites comprenant en poids 70% d'$Al_2O_3$ et 30% de TiC utilisé comme renfort. Ces composites ont pour caractéristique de présenter peu ou pas d'éclat métallique comparés à d'autres matériaux tels que les aciers inoxydables ou des cermets, ce qui peut être un désavantage pour des articles décoratifs où cet éclat est recherché.

On connaît également des matériaux à base de nitrures ou carbonitrures de titane. Ces matériaux sont extrêmement difficiles à densifier compte tenu de leurs températures de fusion très élevées, par ex. de 2930°C pour le TiN, associées à leurs faibles coefficients de diffusion. De ce fait, il est alors nécessaire de recourir à des méthodes de frittage rapide, dit aussi flash, telles que le frittage SPS (Spark Plasma Sintering) ou à des méthodes de frittage sous pression (Sinter-HIP) ou à des méthodes de consolidation sous très hautes pressions et hautes températures après frittage telles que le HIP (Hot Isostatic Pressure). De plus, ces procédés de frittage ne permettent pas l'obtention de pièces de formes complexes. Une manière de résoudre ce problème consiste, par exemple pour réaliser des cermets à base de TiN ou de TiCN, à ajouter un élément métallique jouant le rôle de liant métallique. Ainsi, un ajout de quelques pourcents de nickel ou de cobalt permet une consolidation à plus basses températures, typiquement de l'ordre de 1500°C. Ces éléments présentent cependant pour désavantage d'être fortement allergènes, limitant leur utilisation à des articles non destinés à être en contact avec la peau.

RESUME DE L'INVENTION

La présente invention a pour objet de pallier aux désavantages précités en proposant un matériau céramique, aussi appelé composite, avec une composition et un procédé de fabrication optimisés pour remplir les critères suivants :

-    s'affranchir de l'utilisation d'éléments allergènes tels que le nickel ou le cobalt,

-    avoir un éclat métallique élevé (65≤L*≤85),

-    pouvoir être densifié sous pression atmosphérique, sous vide ou sous pression partielle de gaz sans recourir à de hautes pressions afin de conserver la forme de l'ébauche de l'article à l'issue du frittage,

-    avoir une dureté minimum de 500 HV30, de préférence minimum de 800 HV30 et plus préférentiellement minimum de 1000 HV30 pour les applications nécessitant une très bonne résistance aux rayures, tout en ayant une ténacité suffisante avec, de préférence, un $K_ic$ supérieur ou égal à 2.5 MPa.m$^{1/2}$.

A cette fin, la présente invention propose un article réalisé dans un matériau constitué de plusieurs phases céramiques, ledit matériau comportant :

-    une phase céramique majoritaire comprenant des nitrures et/ou des carbonitrures d'un ou plusieurs éléments du groupe IVB, à savoir le Ti, Zr et Hf, et/ou du groupe VB, à savoir le V, Nb et Ta, ladite phase céramique majoritaire étant présente dans un pourcentage en poids compris entre 60 et 98%,

-    au moins une phase céramique minoritaire, avec soit une seule phase céramique minoritaire formée de siliciure de zirconium et/ou d'aluminium, soit plusieurs phases céramiques minoritaires formées respectivement de carbures d'un ou plusieurs éléments du groupe IVB (Ti, Zr, Hf), du groupe VB (V, Nb, Ta) et du groupe VIB (Cr, Mo, W), et d'oxydes de zirconium et/ou d'oxydes d'aluminium, ladite au moins phase céramique minoritaire étant présente dans sa totalité dans un pourcentage en poids compris entre 2 et 40%.

Le matériau composite ainsi développé présente après polissage un éclat métallique semblable à celui observé dans des aciers inoxydables ou des cermets utilisant comme liant métallique le nickel ou le cobalt. Ces composites présentent pour autres avantages d'être dépourvus d'éléments allergènes tels que le Ni. Ils possèdent également des duretés élevées et des ténacités suffisantes pour la réalisation de composants d'habillage tout en étant amagnétiques. En outre, ils peuvent être mis en forme par des procédés classiques de métallurgie des poudres tels que le pressage ou l'injection ou par divers procédés dédiés à la fabrication de pièces tridimensionnelles comme, par exemple, l'impression 3D afin d'obtenir des pièces «near-net shape». Des pièces de forme plus ou moins complexe peuvent être finalement consolidées à des températures comprises entre 1400 et 1900°C sous pression atmosphérique, sous vide ou sous pression partielle de gaz, c.à.d. sans recourir à des pressions importantes.

Les articles réalisés dans ce matériau céramique ont par ailleurs pour avantage d'avoir une belle couleur présente dans la masse avec des nuances allant du jaune au rose tirant vers le rouge selon la composition.

D'autres caractéristiques et avantages de la présente invention apparaîtront dans la description suivante d'un mode de réalisation préféré, présenté à titre d'exemple non limitatif en référence au dessin annexé.

BREVE DESCRIPTION DE LA FIGURE

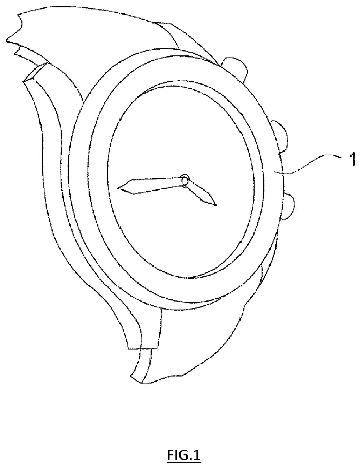

La figure 1 représente une pièce d'horlogerie comprenant une carrure réalisée avec le matériau céramique selon l'invention.

DESCRIPTION DETAILLEE

La présente invention se rapporte à un article réalisé dans un matériau composite uniquement constitué de phases céramiques. L'article peut être un article décoratif tel qu'un élément constitutif de montres, bijoux, bracelets, etc. ou plus généralement une partie externe d'un élément portable comme une coque d'un téléphone mobile. Dans le domaine horloger, cet article peut être une pièce d'habillage telle qu'une carrure, un fond, une lunette, une couronne, un pont, un poussoir, un maillon de bracelet, un cadran, une aiguille, un index de cadran, etc. A titre illustratif, une carrure réalisée avec le matériau céramique selon l'invention est représentée à la figure 1. Il peut également s'agir d'un composant du mouvement tel qu'une platine ou une masse oscillante.

Le matériau céramique comporte une phase majoritaire composée de nitrures et/ou de carbonitrures d'un ou plusieurs éléments choisis parmi le Ti, Zr, Hf, V, Nb et Ta, et une ou plusieurs phases minoritaires. Ces dernières peuvent être soit du siliciure de zirconium et/ou d'aluminium, soit une combinaison de carbures d'un ou plusieurs éléments choisis parmi le Ti, Zr, Hf, V, Nb, Ta, Cr, Mo et W et d'oxydes de zirconium (Zr) et/ou d'aluminium (Al). De préférence, la phase majoritaire est composée de nitrures de titane et/ou de carbonitrures de titane. De préférence, la ou les phases minoritaires sont composées respectivement soit du siliciure de zirconium et/ou d'aluminium, soit d'une combinaison de carbures de tungstène et/ou de vanadium et d'oxydes de zirconium et/ou d'aluminium

La phase majoritaire est présente dans un pourcentage en poids compris entre 60 et 98% et l'ensemble des phases minoritaires est présent dans un pourcentage en poids compris entre 2 et 40%. Préférentiellement, la phase majoritaire est présente dans un pourcentage en poids compris entre 65 et 97%, plus préférentiellement entre 70 et 96% en poids, et encore plus préférentiellement entre 75 et 95%. En complément de la phase majoritaire, l'ensemble des phases minoritaires est présent dans un pourcentage en poids préférentiellement compris entre 3 et 35%, plus préférentiellement entre 4 et 30% et encore plus préférentiellement entre 5 et 25%. Lorsque la phase majoritaire comprend des nitrures et des carbonitrures d'un ou plusieurs éléments choisis parmi le Ti, Zr, Hf, V, Nb et Ta, les nitrures et carbonitrures sont préférentiellement présents respectivement dans un pourcentage compris entre 20 et 70% en poids, plus préférentiellement entre 25 et 60%, par rapport au poids total du matériau céramique. Lorsque le matériau céramique comporte deux phases minoritaires respectivement de carbures d'un élément ou plusieurs éléments choisis parmi le Ti, Zr, Hf, V, Nb, Ta, Cr, Mo et W et d'oxydes ($Al_2O_3$ et/ou $ZrO_2$), elles sont respectivement et préférentiellement présentes dans un pourcentage compris entre 3 et 35% en poids, plus préférentiellement entre 5 et 25%, par rapport au poids total du matériau céramique.

L'article en céramique est réalisé par frittage partant d'un mélange de poudres. Le procédé de fabrication comporte les étapes consistant à:

a) Réaliser un mélange avec les différentes poudres céramiques et ce éventuellement en milieu humide. Les poudres de départ ont préférentiellement un d50 inférieur à 45 $\mu$m. Le mélange peut éventuellement être réalisé dans un broyeur, ce qui réduit le d50 des particules de la poudre à une taille de l'ordre de quelques microns (<5$\mu$m) après broyage. Les poudres de nitrures et/ou de carbonitrures d'un élément ou plusieurs éléments choisis parmi le Ti, Zr, Hf, V, Nb et Ta sont présentes dans un pourcentage en poids pour l'ensemble de ces poudres compris entre 60 et 98%, de préférence entre 65 et 97%, plus préférentiellement entre 70 et 96% et encore plus préférentiellement entre 75 et 95%. Les poudres de siliciure de zirconium et/ou de siliciure d'aluminium ou les poudres de carbures de Ti, Zr, Hf, V, Nb, Ta, Cr, Mo et W et d'oxydes de zirconium et/ou d'aluminium sont présentes dans un pourcentage en poids compris entre 2 et 40%, de préférence entre 3 et 35%, plus préférentiellement entre 4 et 30%, encore plus préférentiellement entre 5 et 25%. A titre d'exemple, le mélange de poudres peut comporter en poids une des répartitions suivantes pour un total de 100%:

- entre 75 et 85% de TiN ou de TiCN et entre 15 et 25% de ZrSi2,

- entre 85 et 95% de TiN ou de TiCN et entre 5 et 15% de ZrSi2,

- entre 75 et 85% de TiN ou de TiCN, entre 5 et 15% de WC ou VC et entre 5 et 15% de ZrO2 ou Al2O3,

- entre 40 et 55% de TiN, entre 25 et 35% de TiCN, entre 5 et 15% de WC ou VC et entre 5 et 15% de ZrO2.

b) Eventuellement, un deuxième mélange comprenant le mélange précité et un système de liant organique (paraffine, polyéthylène, etc.) peut être réalisé.

c) Former une ébauche en conférant au mélange la forme de l'article désiré, par exemple, par injection ou pressage ou par impression 3D.

d) Fritter l'ébauche sous pression partielle de gaz, sous vide ou sous pression atmosphérique à une température comprise entre 1200 et 2100°C, de préférence entre 1400 et 1900°C pendant une période comprise entre 10 minutes et 20 heures, de préférence entre 15 minutes et 3 heures. Cette étape peut être précédée d'une étape de déliantage dans une gamme de températures comprise entre 60 et 500°C si le mélange comporte un système de liant. Bien que les compositions selon l'invention permettent un frittage sous faible pression, la présente invention n'exclut pas que le frittage soit réalisé par SPS (Spark Plasma Sintering) ou par sinter-HIP, suivi ou non d'une consolidation HIP (Hot Isostatic Pressure).

L'ébauche ainsi obtenue est refroidie et polie. Elle peut également être usinée avant polissage pour obtenir l'article désiré.

L'article issu du procédé de fabrication comporte la phase majoritaire et la ou les phases minoritaires dans des pourcentages en poids proches de ceux des poudres de départ. On ne peut cependant exclure des petites variations de compositions et de pourcentages entre les poudres de base et le matériau issu du frittage suite, par exemple, à des contaminations ou des transformations lors du frittage. Par exemple, les carbures pourraient réagir avec les nitrures pour former des carbonitrures.

L'article a un espace colorimétrique CIELAB (conforme aux normes CIE n°15, ISO 7724/1, DIN 5033 Teil 7, ASTM E-1164) avec une composante de luminance $L^*$, représentative de la manière dont le matériau réfléchit la lumière, comprise entre 60 et 85 et, de préférence, entre 65 et 80, et plus préférentiellement entre 70 et 75. Avantageusement, l'article est de couleur jaune et a une composante $a^*$ (composante rouge) comprise entre +1 et +7 et une composante $b^*$ (composante jaune) comprise entre +20 et +35. Avantageusement, l'article est de couleur rose-rouge et a une composante $a^*$ comprise entre +2 et +15 et une composante $b^*$ comprise entre +2 et +10.

Le matériau céramique a une dureté HV30 supérieure ou égale à 500, de préférence comprise entre 800 et 1800 en fonction des types et des pourcentages des constituants. Il a une ténacité $K_ic$ supérieure ou égale à 2 et de préférence supérieure ou égale à 2,5 MPa.m$^{1/2}$ avec des valeurs pouvant aller jusqu'à 8 MPa.m$^{1/2}$, la ténacité étant déterminée sur base des mesures des longueurs des fissures aux quatre extrémités des diagonales de l'empreinte de dureté selon la formule :

$$K_{1c} = 0.0319 \frac{P}{al^{1/2}}$$

avec $P$ qui est la charge appliquée (N), $a$ qui est la demi-diagonale (m) et $l$ qui est la longueur de la fissure mesurée (m).

Les exemples ci-après illustrent le procédé selon l'invention et le matériau qui en est issu.

7 mélanges de poudres ont été préparés dans un broyeur en présence d'un solvant. Les mélanges ont été réalisés sans liant. Ils ont été mis en forme par pressage et frittés soit sous vide, soit sous un flux d'argon ou d'azote à 60 mbar, à une température qui est fonction de la composition des poudres. Après frittage, les échantillons ont été polis. Le tableau 1 ci-après reprend les compositions, les paramètres de frittage et les propriétés mécaniques (HV30, $K_1c$) ainsi que les valeurs colorimétriques Lab. Les valeurs en italique et gras remplissent les critères pour une dureté supérieure à 800 Vickers, une ténacité supérieure à 2.5 MPa.m$^{1/2}$, un indice $L^*$ supérieur à 70 ou un indice $b^*$ supérieur à 20 pour une couleur très jaune.

Des mesures de dureté HV$_{30}$ ont été réalisées en surface des échantillons et la ténacité a été déterminée sur base des mesures de duretés comme décrit précédemment.

Les valeurs colorimétriques Lab ont été mesurées sur les échantillons polis avec un spectrophotomètre KONICA MINOLTA CM-5 dans les conditions suivantes : mesures SCI (réflexion spéculaire incluse) et SCE (réflexion spéculaire excluse), inclinaison de 8°, zone de mesure MAV de 8 mm de diamètre.

Exemple 1

Il s'agit d'un composite céramique comportant comme phase majoritaire le nitrure de titane (TiN) et comme phase minoritaire à hauteur de 20% massique le siliciure de zirconium (ZrSi$_2$). Selon l'invention et à titre de comparatif par rapport à un frittage classique, ce composite a été densifié par Spark Plasma Sintering (SPS). La dureté mesurée est de 1328 Vickers (HV30) et la ténacité de 4.3 MPa.m$^{1/2}$.

Exemple 2

Il s'agit d'un composite céramique comportant comme phase majoritaire le nitrure de titane (TiN) et comme phase minoritaire à hauteur de 10% massique le siliciure de zirconium (ZrSi$_2$). Ce composite 90TiN-10ZrSi$_2$ a été densifié à la fois par SPS et par frittage classique. Lorsqu'il est fritté par frittage classique, on observe une baisse de la dureté par rapport à un frittage SPS, passant de 1302 à 863 Vickers mais conservant une bonne ténacité (4.2 versus 4.4 MPa.m$^{1/2}$). Par contre, par frittage classique, on obtient un bien meilleur éclat avec un indice de luminance (L*) plus élevée (74.5 versus 66.2). Le frittage classique permet aussi l'obtention d'une teinte plus jaune avec une valeur de la composante jaune b* légèrement plus élevée.

Exemple 3

Il s'agit d'un composite céramique comportant comme phase majoritaire le carbonitrure de titane (TiCN) et comme phase minoritaire à hauteur de 10% massique le siliciure de zirconium (ZrSi$_2$). Ce composite 90TiCN-10ZrSi2 possède une dureté plus faible de 590 Vickers mais montre la coloration jaune la plus marquée avec une valeur de b* atteignant 27.29.

Exemple 4

Il s'agit d'un composite céramique à base de nitrure de titane (TiN) comme phase majoritaire, et avec pour phases minoritaires les carbures de tungstène (WC) et l'oxyde d'aluminium (Al$_2$O$_3$), selon les proportions en poids 80TiN-10WC-10Al$_2$O$_3$. Un tel composite, densifié par frittage classique et sans apport de pression, possède une dureté de 938 Vickers, une ténacité de 3.6 MPam$^{1/2}$ et une couleur de teinte jaune soutenu avec des valeurs de 1.7 pour a* et de 26.2 pour b* tout en conservant un bel éclat métallique (L*= 72.8).

Exemple 5

Il s'agit d'un composite céramique à base de nitrure de titane (TiN) comme phase majoritaire et avec comme phases minoritaires le carbure de tungstène (WC) et le dioxyde de zirconium (ZrO$_2$), selon les proportions en poids 80TiN-10WC-10ZrO$_2$. Ce composite présente une dureté maximum de 1187 Vickers et une luminance mesurée L* de 72.9. La couleur d'un tel composite céramique est jaune, avec des valeurs des indices a* et b* de 1.48 et 26.0 respectivement. Le fait de remplacer l'oxyde d'aluminium (exemple 4) par le dioxyde de zirconium permet donc d'augmenter la dureté de 249 Vickers.

Exemple 6

Il s'agit d'un composite céramique à base de nitrure de titane (TiN) comme phase majoritaire et avec comme phases minoritaires le carbure de vanadium (VC) et le dioxyde de zirconium (ZrO$_2$), selon les proportions en poids 80TiN-10VC-10ZrO$_2$. Ce composite présente une dureté de 1275 Vickers et une luminance mesurée L* de 71.8. La couleur d'un tel composite céramique est jaune, avec des valeurs de a* et b* de 2.9 et 23.4 respectivement. Le fait de remplacer le carbure de tungstène (exemple 5) par le carbure de vanadium permet donc d'augmenter la dureté d'environ 7%.

Exemple 7

Il s'agit d'un composite céramique comportant comme phase majoritaire le nitrure de titane (TiN) et le carbonitrure de titane (TiCN), et comme phases minoritaires le carbure de tungstène (WC) et le dioxyde de zirconium ($ZrO_2$), selon les proportions en poids 48TiN-32TiCN-10WC-10$ZrO_2$. Un tel composite présente une coloration rose-rouge avec des indices a* et b* de valeurs 7.52 et 8.02 respectivement. La dureté mesurée est très élevée soit 1727 Vickers et presque identique à celle obtenue par frittage SPS. Cette augmentation résulte directement de l'addition du carbure de tungstène.

Tableau 1

| N° | Composition (pds) | | | Frittage | | | Propriétés | | | | |
|---|---|---|---|---|---|---|---|---|---|---|---|
| | Nitrure | Carbure | Oxyde / Siliciure | Four | T(°C) | tps (min) | HV30 | K1C (MPa.m1/2) | L* | a* | b* |
| (1) | 80% TiN | / | 20% ZrSi2 | SPS | 1400 | 15 | *1328* | **4.3** | 65.5 | 6.45 | *22.36* |
| (2) | 90% TiN | / | 10% ZrSi2 | Normal | 1450 | 90 | 657 | **3.6** | *75.0* | 3.39 | *24.33* |
| | | | | Normal | 1500 | 90 | 701 | *2.8* | *73.1* | 3.07 | *23.92* |
| | | | | Normal | 1600 | 90 | *863* | **4.2** | *74.5* | 1.17 | *25.31* |
| | | | | SPS | 1500 | 15 | *1302* | **4.4** | 66.2 | 6.18 | *23.59* |
| (3) | 90% TiCN | / | 10% ZrSi2 | Normal | 1600 | 90 | 590 | **4.9** | 69.3 | 2.07 | *27.29* |
| (4) | 80% TiN | 10% WC | 10% Al2O3 | Normal | 1650 | 90 | *938* | **3.6** | *72.8* | 1.71 | *26.22* |
| | | | | Normal | 1700 | 75 | *1002* | 2.2 | *70.9* | 1.46 | *25.81* |
| (5) | 80% TiN | 10% WC | 10% ZrO2 | Normal | 1600 | 90 | *1050* | **4.2** | *72.4* | 1.59 | *25.66* |
| | | | | Normal | 1650 | 90 | *1187* | **3.6** | *72.9* | 1.48 | *26.00* |
| (6) | 80% TiN | 10% VC | 10% ZrO2 | Normal | 1650 | 30 | *1050* | 2.3 | *70.1* | 3.13 | *22.74* |
| | | | | Normal | 1750 | 30 | *1275* | *2.8* | *71.8* | 2.94 | *23.42* |
| (7) | 48%TiN - 32%TiCN | 10% WC | 10% ZrO2 | Normal | 1650 | 45 | *1727* | 2.4 | 64.5 | 7.17 | 7.58 |
| | | | | Normal | 1725 | 45 | *1721* | 2.7 | 64.1 | 7.52 | 8.02 |

**Revendications**

1. Article réalisé dans un matériau constitué de plusieurs phases céramiques, ledit matériau comportant :

   - une phase céramique majoritaire comprenant des nitrures et/ou des carbonitrures d'un ou plusieurs éléments choisis parmi le Ti, Zr, Hf, V, Nb, et Ta, ladite phase céramique majoritaire étant présente dans un pourcentage en poids compris entre 60 et 98%,
   - au moins une phase céramique minoritaire, avec soit une seule phase céramique minoritaire formée de siliciure de zirconium et/ou d'aluminium, soit plusieurs phases céramiques minoritaires formées respectivement de carbures d'un ou plusieurs éléments choisis parmi le Ti, Zr, Hf, V, Nb, Ta, Cr, Mo et W et d'oxydes de zirconium et/ou d'oxydes d'aluminium, ladite au moins phase céramique minoritaire étant présente dans sa totalité dans un pourcentage en poids compris entre 2 et 40%.

2. Article selon la revendication 1, **caractérisé en ce que** la phase céramique majoritaire est présente dans un pourcentage en poids compris entre 65 et 97% et **en ce que** ladite au moins phase céramique minoritaire est présente dans sa totalité dans un pourcentage en poids compris entre 3 et 35%.

3. Article selon la revendication 1 ou 2, **caractérisé en ce que** la phase céramique majoritaire est présente dans un pourcentage en poids compris entre 70 et 96% et **en ce que** ladite au moins phase céramique minoritaire est présente dans sa totalité dans un pourcentage en poids compris entre 4 et 30%.

4. Article selon l'une quelconque des revendications précédentes, **caractérisé en ce que** la phase céramique majoritaire est présente dans un pourcentage en poids compris entre 75 et 95% et **en ce que** ladite au moins phase céramique minoritaire est présente dans sa totalité dans un pourcentage en poids compris entre 5 et 25%.

5. Article selon l'une quelconque des revendications précédentes, **caractérisé en ce que** lorsque la phase céramique majoritaire comprend des nitrures et des carbonitrures d'un ou plusieurs éléments choisis parmi le Ti, Zr, Hf, V, Nb et le Ta, lesdits nitrures et carbonitrures sont présents respectivement dans un pourcentage compris entre 20 et 70% en poids par rapport au poids total du matériau céramique.

6. Article selon la revendication précédente, **caractérisé en ce que** lesdits nitrures et carbonitrures sont présents respectivement dans un pourcentage compris entre 25 et 60% en poids par rapport au poids total du matériau céramique.

7. Article selon l'une quelconque des revendications précédentes, **caractérisé en ce que** lorsque le matériau comporte deux phases céramiques minoritaires formées respectivement de carbures d'un ou plusieurs éléments choisis parmi le Ti, Zr, Hf, V, Nb, Ta, Cr, Mo et W et d'oxydes de zirconium et/ou d'oxydes d'aluminium, les phases céramiques minoritaires formées de carbures et d'oxydes sont respectivement présentes dans un pourcentage en poids compris entre 3 et 35%.

8. Article selon la revendication précédente, **caractérisé en ce que** les phases céramiques minoritaires formées de carbures et d'oxydes sont respectivement présentes dans un pourcentage compris entre 5 et 25% par rapport au poids total du matériau céramique.

9. Article selon l'une quelconque des revendications précédentes, **caractérisé en ce que** la phase céramique majoritaire comprend des nitrures de titane et/ou des carbonitrures de titane.

10. Article selon l'une quelconque des revendications précédentes, **caractérisé en ce que** lesdites plusieurs phases céramiques minoritaires sont formées respectivement de carbures de tungstène et/ou de carbures de vanadium et d'oxydes de zirconium et/ou d'oxydes d'aluminium.

11. Article selon l'une quelconque des revendications précédentes, **caractérisé en ce qu'**il a, dans un espace colorimétrique CIELAB, une composante L* comprise entre 60 et 85 et, de préférence, entre 65 et 80.

12. Article selon l'une quelconque des revendications précédentes, **caractérisé en ce qu'**il est de couleur jaune et a, dans un espace colorimétrique CIELAB, une composante a* comprise entre +1 et +7 et une composante comprise entre +20 et +35.

**13.** Article selon l'une quelconque des revendications 1 à 11, **caractérisé en ce qu'**il est de couleur rose-rouge et a, dans un espace colorimétrique CIELAB, une composante a* comprise entre +2 et +15 et une composante comprise entre +2 et +10.

**14.** Article selon l'une quelconque des revendications précédentes, **caractérisé en ce qu'**il a une dureté HV30 supérieure ou égale à 500.

**15.** Article selon l'une quelconque des revendications précédentes, **caractérisé en ce qu'**il a une dureté HV30 comprise entre 800 et 1800.

**16.** Article selon l'une quelconque des revendications précédentes, **caractérisé en ce qu'**il a une ténacité Kic supérieure ou égale à 2 et de préférence supérieure ou égale à 2,5 MPa.m1/2.

**17.** Article selon l'une quelconque des revendications précédentes, **caractérisé en ce que** le matériau comporte pour un total de 100% une des répartitions suivantes :

- une phase céramique majoritaire comprenant entre 75 et 85% de TiN ou de TiCN et une phase céramique minoritaire comprenant entre 15 et 25% de ZrSi2,
- une phase céramique majoritaire comprenant entre 85 et 95% de TiN ou de TiCN et une phase céramique minoritaire comprenant entre 5 et 15% de ZrSi2,
- une phase céramique majoritaire comprenant entre 75 et 85% de TiN ou de TiCN, et deux phases céramiques minoritaires comprenant respectivement entre 5 et 15% de WC ou VC et entre 5 et 15% de ZrO2 ou Al2O3,
- une phase céramique majoritaire comprenant entre 40 et 55% de TiN, et deux phases céramiques minoritaires comprenant respectivement entre 25 et 35% de TiCN, entre 5 et 15% de WC ou VC et entre 5 et 15% de ZrO2.

**18.** Article selon l'une quelconque des revendications précédentes, **caractérisé en ce qu'**il s'agit d'un composant horloger.

**19.** Article selon la revendication précédente, **caractérisé en ce qu'**il s'agit d'un composant d'habillage choisi parmi la liste comprenant une carrure, un fond, une lunette, un poussoir, une couronne, un maillon de bracelet, un cadran, une aiguille et un index de cadran ou d'un composant du mouvement choisi parmi la liste comprenant une platine, un pont et une masse oscillante.

**20.** Procédé de fabrication d'un article comprenant les étapes successives consistant à :

a) Réaliser un mélange comprenant une poudre de nitrures et/ou de carbonitrures d'un ou plusieurs éléments choisis parmi le Ti, Zr, Hf, V, Nb et Ta, dans un pourcentage en poids compris entre 60 et 98% et comprenant au moins une poudre :

- soit formée de siliciure de zirconium et/ou d'aluminium,
- soit formée de carbures d'un ou plusieurs éléments choisis parmi le Ti, Zr, Hf, V, Nb, Ta, Cr, Mo et W et d'oxydes de zirconium et/ou d'oxydes d'aluminium,
- ladite au moins poudre étant présente dans sa totalité dans un pourcentage en poids compris entre 2 et 40%,

b) Former une ébauche en conférant audit mélange la forme de l'article,
c) Fritter l'ébauche à une température comprise entre 1200 et 2100°C, de préférence entre 1400 et 1900°C, pendant une période comprise entre 30 minutes et 20 heures, de préférence entre 15 minutes et 3 heures.

**21.** Procédé de fabrication selon la revendication 20, **caractérisé en ce que** le mélange de poudres de l'étape a) comporte pour un total de 100% une des répartitions suivantes :

- entre 75 et 85% de TiN ou de TiCN et entre 15 et 25% de ZrSi2,
- entre 85 et 95% de TiN ou de TiCN et entre 5 et 15% de ZrSi2,
- entre 75 et 85% de TiN ou de TiCN, entre 5 et 15% de WC ou VC et entre 5 et 15% de ZrO2 ou Al2O3,
- entre 40 et 55% de TiN, entre 25 et 35% de TiCN, entre 5 et 15% de WC ou VC et entre 5 et 15% de ZrO2.

FIG.1

**RAPPORT DE RECHERCHE EUROPEENNE**

Numéro de la demande

EP 20 19 8345

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 108 752 005 A (UNIV GUIZHOU) 6 novembre 2018 (2018-11-06) | 1-4,9, 11-16, 18-20 | INV. C04B35/58 A44C5/00 |
| A | * exemple 1 * | 17,21 | |
| X | CN 105 238 984 A (SUZHOU COSMETIC MATERIALS CO LTD) 13 janvier 2016 (2016-01-13) * revendication 3 * | 1-4,7,8, 11-16, 18-20 | |
| X | JP H02 157169 A (NIPPON STEEL CORP) 15 juin 1990 (1990-06-15) | 1-6,9, 11-16, 18-20 | |
| A | * revendication 1 * | 17,21 | |
| A | JP H10 7464 A (KYOCERA CORP) 13 janvier 1998 (1998-01-13) * alinéa [0007] - alinéa [0011]; revendication 1 * | 1-6,9, 11-21 | |
| X | WO 2014/042315 A1 (MYONGJI UNIV IND & ACAD COOP [KR]; LEE KWANG-HO [KR]; LEE BYUNG HA) 20 mars 2014 (2014-03-20) * résumé; alinéa [0050]; tableau 3 * | 1-5,7-9, 11-16, 18-20 | DOMAINES TECHNIQUES RECHERCHES (IPC) C04B A44C |
| X | US 2019/240739 A1 (ISHII AKITO [JP] ET AL) 8 août 2019 (2019-08-08) * alinéa [0136] - alinéa [0141]; tableaux 3,4 * | 1-16,18, 20 | |
| X | EP 0 651 067 A2 (UFEC [CH]) 3 mai 1995 (1995-05-03) * page 1, ligne 2 - ligne 8; exemples 1-5 * | 1-9, 11-16, 18,20 | |

-/--

Le présent rapport a été établi pour toutes les revendications

| Lieu de la recherche | Date d'achèvement de la recherche | Examinateur |
|---|---|---|
| La Haye | 12 mars 2021 | Raming, Tomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 20 19 8345

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/075543 A1 (ZHU YAOCAN [JP] ET AL) 27 mars 2008 (2008-03-27) <br><br> * revendication 1; exemples III-a * <br> ----- | 1-9, 11-16, 18,20 | |
| X | JP H07 82048 A (KYOCERA CORP) 28 mars 1995 (1995-03-28) <br><br> * alinéas [0003], [0018]; tableaux 1,2 * <br> ----- | 1-5,7-9, 11-16, 18,20 | |
| X | JP H11 217258 A (NIPPON TUNGSTEN; RIKEN KK) 10 août 1999 (1999-08-10) * alinéa [0018]; exemples 6,20; tableau 1 * <br><br> ----- | 1-21 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 12 mars 2021 | Raming, Tomas |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ...................................................................
& : membre de la même famille, document correspondant

EPO FORM 1503 03.82 (P04C02)

Europäisches
Patentamt

European
Patent Office

Office européen
des brevets

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☒ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION**
**FEUILLE SUPPLÉMENTAIRE B**

Numéro de la demande

EP 20 19 8345

La division de la recherche estime que la présente demande de brevet européen ne satisfait pas à l'exigence relative à l'unité d'invention et concerne plusieurs inventions ou pluralités d'inventions, à savoir :

1. revendications: 1-6, 9, 11-21(toutes en partie)

   I) Article réalisé dans un matériau constitué de plusieurs phases céramiques, ledit matériau comportant :
   - une phase céramique majoritaire comprenant des nitrures et/ou des carbonitrures d'un ou plusieurs éléments choisis parmi le Ti, Zr, Hf, V, Nb, et Ta, ladite phase céramique majoritaire étant présente dans un pourcentage en poids compris entre 60 et 98%,
   - au moins une phase céramique minoritaire, avec une seule phase céramique minoritaire formée de siliciure de zirconium et/ou d'aluminium, ladite au moins phase céramique minoritaire étant présente dans sa totalité dans un pourcentage en poids compris entre 2 et 40%.
   et
   Procédé de fabrication d'un article comprenant les étapes successives consistant à :
   a) Réaliser un mélange comprenant une poudre de nitrures et/ou de carbonitrures d'un ou plusieurs éléments choisis parmi le Ti, Zr, Hf, V, Nb et Ta, dans un pourcentage en poids compris entre 60 et 98% et comprenant au moins une poudre :
   - formée de siliciure de zirconium et/ou d'aluminium,
   b) Former une ébauche en conférant audit mélange la forme de l'article,
   c) Fritter l'ébauche à une température comprise entre 1200 et 2100°C, de préférence entre 1400 et 1900°C, pendant une période comprise entre 30 minutes et 20 heures, de préférence entre 15 minutes et 3 heures.
   ---

2. revendications: 7, 8, 10(complètement); 1-6, 9, 11-21(en partie)

   Article réalisé dans un matériau constitué de plusieurs phases céramiques, ledit matériau comportant :
   - une phase céramique majoritaire comprenant des nitrures et/ou des carbonitrures d'un ou plusieurs éléments choisis parmi le Ti, Zr, Hf, V, Nb, et Ta, ladite phase céramique majoritaire étant présente dans un pourcentage en poids compris entre 60 et 98%,
   - plusieurs phases céramiques minoritaires formées respectivement de carbures d'un ou plusieurs éléments choisis parmi le Ti, Zr, Hf, V, Nb, Ta, Cr, Mo et W et d'oxydes de zirconium et/ou d'oxydes d'aluminium, ladite au moins phase céramique minoritaire étant présente dans sa totalité dans un pourcentage en poids compris entre 2 et 40%.
   et
   Procédé de fabrication d'un article comprenant les étapes successives consistant à :
   a) Réaliser un mélange comprenant une poudre de nitrures

EPO FORM P0402

Europäisches
Patentamt

European
Patent Office

Office européen
des brevets

**ABSENCE D'UNITÉ D'INVENTION
FEUILLE SUPPLÉMENTAIRE B**

Numéro de la demande

EP 20 19 8345

La division de la recherche estime que la présente demande de brevet européen ne satisfait pas à l'exigence relative à l'unité d'invention et concerne plusieurs inventions ou pluralités d'inventions, à savoir :

et/ou de carbonitrures d'un ou plusieurs éléments choisis parmi le Ti, Zr, Hf, V, Nb et Ta, dans un pourcentage en poids compris entre 60 et 98% et comprenant au moins une poudre :
- formée de carbures d'un ou plusieurs éléments choisis parmi le Ti, Zr, Hf, V, Nb, Ta, Cr, Mo et W et d'oxydes de zirconium et/ou d'oxydes d'aluminium,
- ladite au moins poudre étant présente dans sa totalité dans un pourcentage en poids compris entre 2 et 40%,
b) Former une ébauche en conférant audit mélange la forme de l'article,
c) Fritter l'ébauche à une température comprise entre 1200 et 2100°C, de préférence entre 1400 et 1900°C, pendant une période comprise entre 30 minutes et 20 heures, de préférence entre 15 minutes et 3 heures.
---

EPO FORM P0402

## ANNEXE AU RAPPORT DE RECHERCHE EUROPEENNE
## RELATIF A LA DEMANDE DE BREVET EUROPEEN NO.

EP 20 19 8345

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2021

| Document brevet cité au rapport de recherche | | Date de publication | Membre(s) de la famille de brevet(s) | | | Date de publication |
|---|---|---|---|---|---|---|
| CN 108752005 | A | 06-11-2018 | AUCUN | | | |
| CN 105238984 | A | 13-01-2016 | AUCUN | | | |
| JP H02157169 | A | 15-06-1990 | JP | H0627037 | B2 | 13-04-1994 |
| | | | JP | H02157169 | A | 15-06-1990 |
| JP H107464 | A | 13-01-1998 | JP | H107464 | A | 13-01-1998 |
| | | | JP | 3481777 | B2 | 22-12-2003 |
| WO 2014042315 | A1 | 20-03-2014 | AUCUN | | | |
| US 2019240739 | A1 | 08-08-2019 | CN | 109906212 | A | 18-06-2019 |
| | | | EP | 3527545 | A1 | 21-08-2019 |
| | | | JP | WO2018074017 | A1 | 08-08-2019 |
| | | | KR | 20190071702 | A | 24-06-2019 |
| | | | US | 2019240739 | A1 | 08-08-2019 |
| | | | WO | 2018074017 | A1 | 26-04-2018 |
| EP 0651067 | A2 | 03-05-1995 | AT | 191015 | T | 15-04-2000 |
| | | | CH | 686888 | A5 | 31-07-1996 |
| | | | EP | 0651067 | A2 | 03-05-1995 |
| | | | JP | H07188803 | A | 25-07-1995 |
| | | | US | 5682595 | A | 28-10-1997 |
| US 2008075543 | A1 | 27-03-2008 | DE | 102007046380 | A1 | 03-04-2008 |
| | | | JP | 5188133 | B2 | 24-04-2013 |
| | | | JP | 2009050997 | A | 12-03-2009 |
| | | | US | 2008075543 | A1 | 27-03-2008 |
| JP H0782048 | A | 28-03-1995 | JP | 3051603 | B2 | 12-06-2000 |
| | | | JP | H0782048 | A | 28-03-1995 |
| JP H11217258 | A | 10-08-1999 | JP | 4177493 | B2 | 05-11-2008 |
| | | | JP | H11217258 | A | 10-08-1999 |

EPO FORM P0460

Pour tout renseignement concernant cette annexe : voir Journal Officiel de l'Office européen des brevets, No.12/82